# EUROPEAN PATENT APPLICATION

(11) **EP 4 184 289 A1**
(43) Date of publication of application: **24.05.2023**
(21) Application number: 21882994.3
(22) Date of filing: 25.08.2021
(51) Int. Cl.: G06F 1/30, G06F 1/26, G06F 1/28

(54) **ELECTRONIC DEVICE AND METHOD FOR CONTROLLING POWER IN ELECTRONIC DEVICE**

(30) Priority: 22.10.2020 KR 20200137468
(71) Applicant: Samsung Electronics Co., Ltd., Suwon-si, Gyeonggi-do 16677 (KR)
(72) Inventor: YI, Yongseung, Suwon-si, Gyeonggi-do 16677 (KR); KIM, Hyunseok, Suwon-si, Gyeonggi-do 16677 (KR); PARK, Junghoon, Suwon-si, Gyeonggi-do 16677 (KR); LIM, Hoyeong, Suwon-si, Gyeonggi-do 16677 (KR)
(74) Representative: Arnold & Siedsma
(86) International application number: PCT/KR2021/011341
(87) International publication number: WO 2022/085921

(57) **Abstract**

An electronic device according to various embodiments may comprise: a power management unit which supplies power to components of the electronic device and includes an under-voltage lockout circuit that monitors an input voltage of the power management unit and operates to turn off the power of the electronic device when the input voltage is determined as a first voltage; a power compensation circuit which detects the input voltage of the power management unit and supplies power to the power management unit or stores power to be supplied to the power management unit on the basis of the input voltage of the power management unit; and a processor configured to supply the power stored in the power compensation circuit to the power management unit so that the under-voltage lockout circuit does not operate when the input voltage of the power management unit detected by the power compensation circuit is determined as the first voltage. Various other embodiments may be provided.

## Description

### [Technical Field]

Various embodiments relate to an electronic device and a method of controlling power in the electronic device.

### [Background Art]

A power management unit (e.g., a power management unit (PMU)) that manages power in an electronic device may stably distribute power to components of the electronic device according to a power distribution network (PDN). In addition, the PMU may include an under-voltage lockout (UVLO) circuit that turns off the electronic device to protect the PMU, when the voltage of a battery that receives power is equal to or less than a threshold.

### [Detailed Description of the Invention]

### [Technical Problem]

As functions consuming high power are overlappingly used, an electronic device may consume an excessive current instantaneously. That is, when a maximum instantaneous current (e.g., peak current) beyond the performance of a power distribution network (PDN) is generated in the electronic device, a voltage drop occurs in a battery to a power management unit (PMU), thereby decreasing an input voltage of the PMU to or below a threshold. The resulting operation of an under-voltage lockout (UVLO) circuit may lead to power-off of the electronic device. As a consequence, the electronic device may be abnormally powered off regardless of the state-of-charge (SOC) of a battery of the electronic device.

Various embodiments relate to an electronic device and a method of controlling power in the electronic device, for preventing abnormal power-off of the electronic device.

### [Technical Solution]

An electronic device according to various embodiments may include a power management unit configured to supply power to a component of the electronic device, and include an under voltage lockout circuit monitoring an input voltage of the power management unit and, when the input voltage of the power management unit is determined to be a first voltage, operating to power off the electronic device, a power compensation circuit configured to detect the input voltage of the power management unit, and supply power to the power management unit or store power to be supplied to the power management unit based on the input voltage of the power management unit, and a processor configured to supply power stored in the power compensation circuit to the power management unit to prevent the under voltage lockout circuit from operating, when the input voltage of the power management unit detected by the power compensation circuit is determined to be the first voltage.

A method of controlling power in an electronic device according to various embodiments may include, when an input voltage of a power management unit is determined to be a first voltage, supplying power stored in a power compensation circuit to the power management unit to prevent an under-voltage lockout circuit included in the power management unit and operating to power off the electronic device from operating, and when the input voltage of the power management unit is determined to be a second voltage, charging the power compensation circuit with power to be supplied.

### [Advantageous Effects]

According to various embodiments, abnormal power-off of an electronic caused by generation of a maximum instantaneous current (e.g., peak current) in a turn-on state of the electronic device may be prevented without excessive design overhead and physical limitations of the electronic device.

### [Brief Description of Drawings]

FIG. 1 is a block diagram illustrating an electronic device in a network environment according to various embodiments.
FIG. 2 is a block diagram illustrating an electronic device according to various embodiments.
FIG. 3 is a block diagram illustrating a power compensation circuit according to various embodiments.
FIG. 4 is a flowchart illustrating an operation of controlling power in an electronic device according to various embodiments.
FIG. 5 is a flowchart illustrating an operation of controlling power in an electronic device according to various embodiments.
FIG. 6 is a flowchart illustrating an operation of controlling power in an electronic device according to various embodiments.
FIG. 7 is a flowchart illustrating an operation of controlling power in an electronic device according to various embodiments.
FIGS. 8a, 8b and 8c are graphs illustrating simulation results.

### [Mode for Carrying out the Invention]

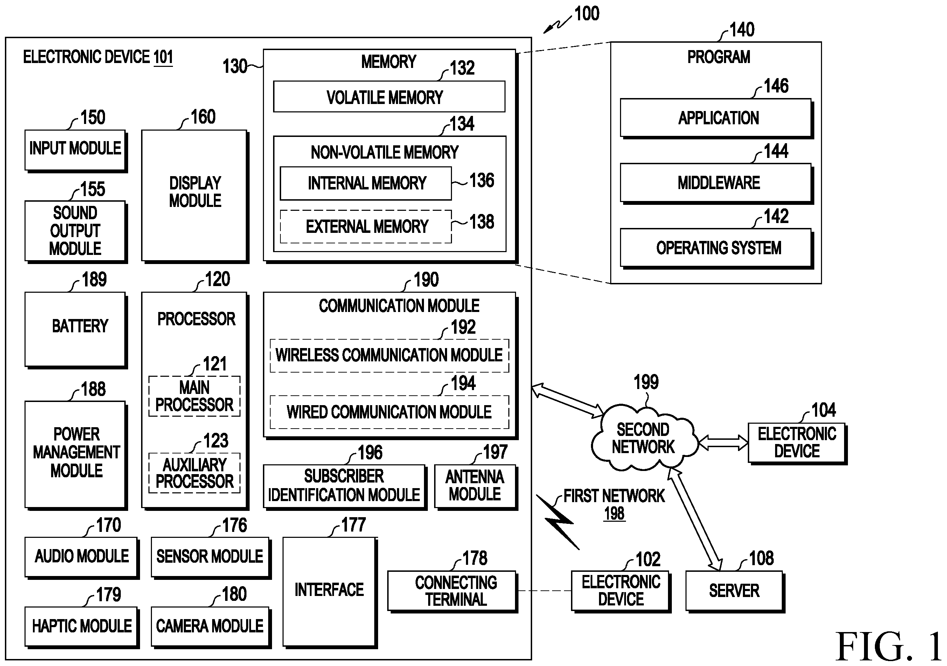

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

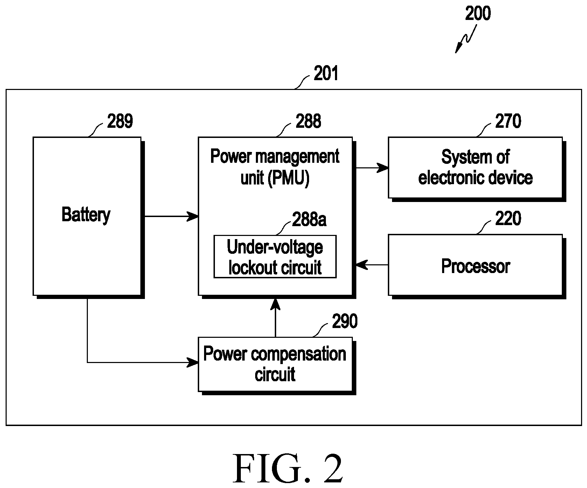

FIG. 2 is a block diagram 200 illustrating an electronic device according to various embodiments.

Referring to FIG. 2, an electronic device 201 (e.g., the electronic device 101 of FIG. 1) may include a processor 220, a system 270 of the electronic device (a component of the electronic device), a power management unit (PMU) 288, a power compensation circuit 290, or a battery 289.

According to various embodiments, the processor 220 may be a control circuit that may control the PMU 288 and the power compensation circuit 290, and may be implemented as at least part of a power management integrated circuit (PMIC) or implemented separately.

According to various embodiments, the processor 220 may be identical to the processor 120 of FIG. 1 that may provide overall control to the operations of the electronic device 201, or perform at least one function or operation performed by the processor 120.

According to various embodiments, the processor 220 may control the power compensation circuit 290 to supply power stored in the power compensation circuit 290 to the PMU 288 based on an input voltage of the PMU 288 detected by the power compensation circuit 290.

According to an embodiment, the processor 220 may receive, from the power compensation circuit 290, the input voltage of the PMU 288 detected by the power compensation circuit 290. When determining the input voltage to be a first voltage equal to or less than a first threshold, the processor 220 may supply power stored in the power compensation circuit 290 to the PMU 288 so that an under-voltage lockout (UVLO) circuit 288a included in the PMU 288 does not operate.

For example, in the case where the first threshold is set to 2.6V, when the input voltage of the PMU 288 is 2.185V, the processor 220 may control the power compensation circuit 290 to supply power to the PMU 288 so that the UVLO circuit 288a included in the PMU 288 does not operate.

According to an embodiment, upon receipt of a first signal indicating detection of the first voltage equal to or less than the first threshold from the power compensation circuit 290, the processor 220 may supply power stored in the power compensation circuit 290 to the PMU 288 so that the UVLO circuit 288a does not operate.

According to an embodiment, the processor 220 may place the power compensation circuit 290 on standby to supply power stored in the power compensation circuit 290 to the PMU 288, while maintaining the power compensation circuit 290 at a pre-set voltage (e.g., 6.6V).

According to an embodiment, when the processor 220 determines the input voltage of the PMU 288 to be the first voltage, the processor 220 may supply power stored in the power compensation circuit 290 to the PMU 288 in a state where the power compensation circuit 290 is at the pre-set voltage (e.g., 6.6V).

According to an embodiment, when the voltage of the power compensation circuit 290 reaches a second threshold during supply of power stored in the power compensation circuit 290 to the PMU 288 in the state where the power compensation circuit 290 is at the pre-set voltage (e.g., 6.6V), the processor 220 may control the power compensation circuit 290 to cut off the power supply to the PMU 288.

According to an embodiment, the second threshold may be set so as to prevent the power compensation circuit 290 from receiving a voltage from the PMU 288 and thus being charged, as the input voltage of the PMU 288 reaches the first threshold or above and further becomes higher than the voltage of the power compensation circuit 290 by receiving the power stored in the power compensation circuit 290.

According to various embodiments, when the processor 220 determines the input voltage of the PMU 288 to be the first voltage within a specific time after determining the input voltage of the PMU 288 to be the first voltage and then supplying power stored in the power compensation circuit 290 to the PMU 288 not to operate the UVLO circuit 288a included in the PMU 288, the UVLO circuit 288a may operate to power off the electronic device.

According to various embodiments, when the processor 220 determines the input voltage of the PMU 288 to be the first voltage again within a specific time after determining the input voltage of the PMU 288 to be the first voltage and then supplying power stored in the power compensation circuit 290 to the PMU 288, the processor 220 may determine that the battery 289 supplying power to the PMU 288 is in a low-voltage state in which the electronic device 201 is to be powered off. When determining that the battery 289 is in the low-voltage state in which the electronic device 201 is to be powered off, the processor 220 may not supply the power stored in the power compensation circuit 290 to the PMU 288 so that the UVLO circuit 288a included in the PMU 288 may operate normally to power off the electronic device.

According to various embodiments, when determining the input voltage of the PMU 288 to be the first voltage and determining that the remaining amount of the battery 289 is equal to or greater than a third threshold and thus the battery 289 is not in the low-voltage state, the processor 220 may control to supply power stored in the power compensation circuit 290 to the PMU 288 so that the UVLO circuit 288a included in the PMU 288 does not operate.

According to various embodiments, when determining the input voltage of the PMU 288 to be the first voltage and determining that the remaining amount of the battery 289 is equal to or less than the third threshold and thus the battery 289 is in the low-voltage state, the processor 220 may not supply power stored in the power compensation circuit 290 to the PMU 288 so that the UVLO circuit 288a included in the PMU 288 normally operates to power off the electronic device.

According to various embodiments, the processor 220 may control to supply power to and thus charge the power compensation circuit 290 based on the input voltage of the PMU 288 detected by the power compensation circuit 290.

According to an embodiment, when the processor 220 receives, from the power compensation circuit 290, the input voltage of the PMU 288 detected by the power compensation circuit 290 and determines the input voltage to be a second voltage equal to or greater than the first threshold, the processor 220 may charge the power compensation circuit 290 with power, determining the input voltage of the PMU 288 to be a stable second voltage, that is, the second voltage at which the UVLO circuit 288a included in the PMU 288 does not operate.

According to an embodiment, when determining the input voltage of the PMU 288 to be the second voltage and determining that the voltage of the power compensation circuit 290 is equal to or less than the second threshold, the processor 220 may control to supply power from the battery 289 to the power compensation circuit 290 and thus charge the power compensation circuit 290.

According to an embodiment, upon receipt of a second signal indicating detection of the second voltage equal to or greater than the first threshold from the power compensation circuit 290, the processor 220 may identify the state of power stored in the power compensation circuit 290. When determining that the voltage of the power compensation circuit 290 is equal to or less than the second threshold, the processor 220 may control to supply power from the battery 289 to the power compensation circuit 290 and thus charge the power compensation circuit 290.

According to an embodiment, when the power compensation circuit 290 is charged to a pre-set voltage (e.g., 6.6V) during supply of power to the power compensation circuit 290, the processor 220 may cut off the power supply to the power compensation circuit 290.

According to various embodiments, the PMU 288 may supply and manage power to the system 270 of the electronic device (the component of the electronic device) under the control of the processor 220.

According to an embodiment, the PMU 288 may include a power management unit (PMU) and be implemented as at least part of a PMIC.

According to an embodiment, the PMU 288 may include the UVLO circuit 288a, and the UVLO circuit 288a may monitor the input voltage of the PMU 288, and when the input voltage is determined to be equal to or less than the first threshold (e.g., 2.6V), operate to power off the electronic device 201 to protect the PMU 288.

According to an embodiment, the UVLO circuit 288a may include an under-voltage lockout (UVLO) circuit.

According to an embodiment, the PMU 288 may include a plurality of PMUs for each function of the system of the electronic device (e.g., a component of an electronic device), and at least one of the plurality of PMUs may include a UVLO circuit (e.g., a UVLO circuit).

According to various embodiments, the power compensation circuit 290 may detect the input voltage of the PMU 288, and supply power to the PMU 288 or be charged with power to be supplied to the power supply 288, based on the input voltage of the PMU 288.

According to an embodiment, when an input voltage detected by the PMU 288 is the first voltage equal to or less than the first threshold, the power compensation circuit 290 may supply power to the PMU 288, and when the input voltage detected by the PMU 288 is the second voltage, the power compensation circuit 290 may store power to be supplied to the PMU 288.

According to an embodiment, the power compensation circuit 290 may be implemented as at least part of a PMIC inside the PMIC or separately outside the PMIC.

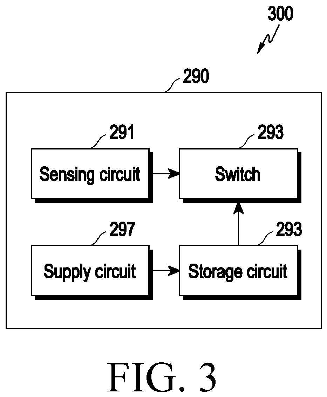

FIG. 3 is a block diagram 300 illustrating a power compensation circuit according to various embodiments.

Referring to FIG. 3, the power compensation circuit 290 may include a sensing circuit 291, a switch 293, a storage circuit 295, and a supply circuit 297.

According to various embodiments, the sensing circuit 291 may detect the input voltage of the PMU 288 by monitoring the input voltage of the PMU 288.

According to an embodiment, the sensing circuit 291 may detect an input voltage of the PMU 288 and transmit the detected input voltage of the PMU 288 to a processor (e.g., the processor 220 of FIG. 2).

According to an embodiment, the sensing circuit 291 may detect the input voltage of the PMU 288, compare the detected input voltage of the PMU 288 with the first threshold, and transmit the first signal indicating detection of the first voltage equal to or less than the first threshold or the second signal indicating detection of the second voltage equal to or greater than the first threshold to the processor (e.g., the processor 220 of FIG. 2) based on a result of the comparison.

According to an embodiment, the sensing circuit 291 may be configured as an input voltage sensing structure using an analog to digital converter (ADC), as a voltage sensing structure using a voltage level comparator, or as hysteresis (hysteresis characteristics) by using a schmitt trigger device.

According to various embodiments, the switch 293 may connect the storage circuit 295 to the PMU 286 under the control of the processor 220 or the sensing circuit 291, so that power stored in the storage circuit 295 to the PMU 286.

According to an embodiment, the switch 293 may be located between the storage circuit 295 and the PMU 286.

According to an embodiment, when the voltage of the storage circuit 295 becomes the second threshold during supply of power stored in the storage circuit 295 to the PMU 288, the storage circuit 295 and the PMU 288 may be disconnected under the control of the processor 220 or the sensing circuit 291.

According to an embodiment, the switch 293 may include an NMOS switch or a PMOS switch as a power switch.

According to various embodiments, when the input voltage of the PMU 288 is the second voltage, if the storage circuit 295 is connected to the PMU 288 through the switch 293, the storage circuit 295 may supply power charged in the storage circuit 295 to the PMU 288.

According to an embodiment, when the input voltage of the PMU 288 is the second voltage, the storage circuit 295 may be connected to the supply circuit 297 to receive power from, and be charged with power from the supply circuit 297.

According to an embodiment, when the voltage of the storage circuit 295 becomes a pre-set voltage (e.g., 6.6V) while receiving power from the supply circuit 297, the storage circuit 295 297) may be disconnected from the supply circuit 297 and the power supply may be cut off.

According to an embodiment, when the voltage of the storage circuit 295 is equal to or less than the second threshold, the storage circuit 295 may receive power from the supply circuit 297 to be charged.

According to an embodiment, in a state in which the storage circuit 295 receives power from the supply circuit 297 and is charged to a pre-set voltage (e.g., 6.6V), the storage circuit 295 may be on standby for power supply to the PMU.

According to an embodiment, as a voltage difference delta V is greater for a short time, a greater current may be discharged. Therefore, as the difference between the pre-set voltage (e.g., 6.6V) of the storage circuit 295 and the first voltage (e.g., 2.185V) equal to or less than the first threshold (e.g., 2.6V) at which the UVLO circuit (e.g., the UVLO circuit 288a of FIG. 1) included in the PMU 288 may operate is greater, power of the storage circuit 295 may be supplied faster to the PMU 288.

According to an embodiment, the storage circuit 295 may increase a capacitor charging voltage by using a switched capacitor-based voltage doubler.

According to various embodiments, the supply circuit 297 may supply power supplied from the battery 289 to the storage circuit 295.

According to an embodiment, when the voltage of the storage circuit 295 is equal to or less than the second threshold, the supply circuit 297 may be connected to the storage circuit 295 and supply power to the storage circuit 295, and when the storage circuit 295 is charged to the pre-set voltage (e.g., 6.6V), the supply circuit 297 may be disconnected from the storage circuit 295 and cut off the power supply to the storage circuit 295, under the control of the processor 220.

According to an embodiment, the supply circuit 297 may include a boost converter, a charge pump, or a low dropout (LDO) as a regulated power source.

According to various embodiments, an electronic device may include a PMU (e.g., the PMU 288 of FIG. 2) configured to supply power to a component of the electronic device (e.g., the system 270 of the electronic device in FIG. 2), and include a UVLO circuit (e.g., the UVLO circuit 288a of FIG. 2) monitoring an input voltage of the PMU and, when the input voltage of the PMU is determined to be a first voltage, operating to power off the electronic device; a power compensation circuit (e.g., the power compensation circuit 290 of FIGS. 2 and 3) configured to detect the input voltage of the PMU, and supply power to the PMU or store power to be supplied to the PMU based on the input voltage of the PMU, and a processor (e.g., the processor 220 of FIG. 2) configured to supply power stored in the power compensation circuit to the PMU to prevent the UVLO circuit from operating, when the input voltage of the PMU detected by the power compensation circuit is determined to be the first voltage.

According to various embodiments, the under-voltage lockout circuit may include UVLO.

According to various embodiments, the processor may be configured to determine the input voltage of the PMU to be the first voltage, when the input voltage of the PMU detected by the power compensation circuit is equal to or less than a first threshold.

According to various embodiments, the processor may be configured to cut off power supply to the PMU, when a voltage of the power compensation circuit becomes equal to or less than a second threshold while the power stored in the power compensation circuit is supplied to the PMU in a state in which the voltage of the power compensation circuit is a pre-set voltage.

According to various embodiments, the processor may be configured to operate the UVLO circuit to power off the electronic device, when the input voltage of the PMU detected by the power compensation circuit is determined to be the first voltage within a specific time after the UVLO circuit is prevented from operating by supplying the power stored in the power compensation circuit to the PMU.

According to various embodiments, the processor may be configured to, when the input voltage of the PMU detected by the power compensation circuit is determined to be a second voltage, identify a voltage of the power compensation circuit, and when the voltage of the power compensation circuit is equal to or less than a second threshold, charge the power compensation circuit by supplying power to the power compensation circuit.

According to various embodiments, the processor may be configured to, when the input voltage of the PMU detected by the power compensation circuit is determined to equal to or greater than the first threshold, determine the input voltage of the PMU to be the second voltage.

According to various embodiments, the processor may be configured to cut off power supply to the power compensation circuit, when the voltage of the power compensation circuit is determined to be a pre-set voltage while the power is supplied to the power compensation circuit.

According to various embodiments, the power compensation circuit may include a sensing circuit (e.g., the sensing circuit 291 of FIG. 3) configured to detect the input voltage of the PMU by monitoring the input voltage of the PMU, a switch (e.g., the switch 293) configured to connecta storage circuit and the PMU to each other to supply power stored in the storage circuit to the PMU, the storage circuit (e.g., the storage circuit 295 of FIG. 3) configured to receive power from a supply circuit, store the power, and supply the stored power to the PMU, and the supply circuit (e.g., the supply circuit 297 of FIG. 3) configured to supply power to the storage circuit.

According to various embodiments, the switch may be configured to, when the input voltage of the PMU is the first voltage, connect the storage circuit and the PMU to each other to supply the power stored in the storage circuit to the PMU, and when the voltage of the storage circuit becomes equal to or less than a second threshold while the power stored in the storage circuit is supplied to the PMU, disconnect the storage circuit and the PMU from each other.

According to various embodiments, the storage circuit may be configured to receive power from the supply circuit and store the power, and when the input voltage of the PMU is the first voltage, supply the power to the PMU.

According to various embodiments, the supply circuit may be configured to, when a voltage of the storage circuit is equal to or less than a second threshold, be connected to the storage circuit and supply power to the storage circuit, and when the voltage of the storage circuit becomes a pre-set voltage while the power is supplied to the storage circuit, be disconnected from the storage circuit.

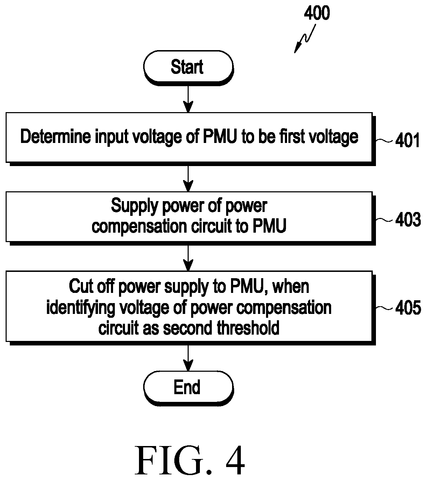

FIG. 4 is a flowchart 400 illustrating an operation of controlling power in an electronic device according to various embodiments. The operation of controlling power may include operations 401 to 405. According to an embodiment, at least one of operations 401 to 405 may be omitted, the order of some operations may be changed, or another operation may be added. The operation of controlling power may be performed by the electronic device 101 of FIG. 1, the processor 120 of FIG. 1, the electronic device 201 of FIG. 2, or the processor 220 of FIG. 2.

In operation 401, the electronic device 201 may determine an input voltage of the PMU (e.g., the PMU 288 of FIG. 2) to be the first voltage.

According to an embodiment, the electronic device 201 may receive an input voltage of the PMU detected by the sensing circuit (e.g., the sensing circuit 291 of FIG. 3) of the power compensation circuit (the power compensation circuit 290 of FIGS. 2 and 3). When the electronic device 201 determines that the input voltage of the PMU is equal to or less than the first threshold (e.g., 2.4V), the electronic device 201 may determine the input voltage of the PMU to be the first voltage.

According to an embodiment, the electronic device 201 may receive the first signal indicating that the input voltage of the PMU is the first voltage equal to or less than the first threshold from the sensing circuit (e.g., the sensing circuit 291 of FIG. 3) of the power compensation circuit (the power compensation circuit 290 of FIGS. 2 and 3).

In operation 403, the electronic device 201 may supply power of the power compensation circuit (e.g., the power compensation circuit 290 of FIGS. 2 and 3) to the PMU (e.g., the PMU 288 of FIG. 2).

According to an embodiment, the electronic device 201 may connect the power compensation circuit and the PMU to supply power stored in the power compensation circuit to the PMU.

In operation 405, when identifying that the voltage of the power compensation circuit (e.g., the power compensation circuit 290 of FIGS. 2 and 3) is the second threshold, the electronic device 201 may cut off the power supply to the PMU (the PMU 288 of FIG. 2).

According to an embodiment, when determining that the voltage of the power compensation circuit is determined to be the second threshold while supplying the power stored in the power compensation circuit to the PMU, the electronic device 201 may disconnect the power compensation circuit and the PMU from each other, and cut off the power supply to the PMU.

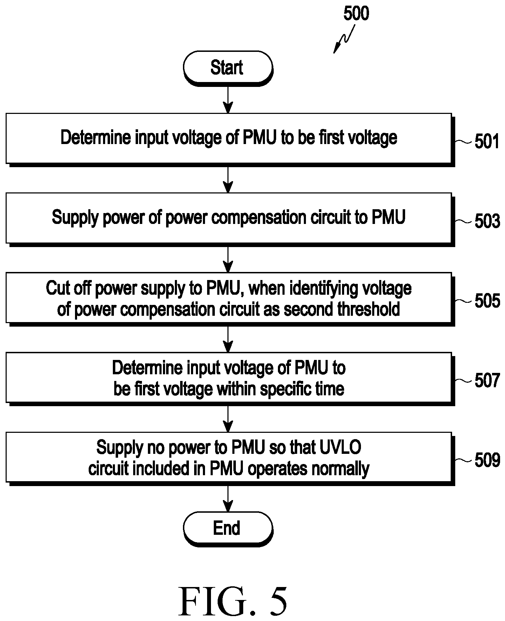

FIG. 5 is a flowchart 500 illustrating an operation of controlling power in an electronic device according to various embodiments. The operation of controlling power may include operations 501 to 509. According to an embodiment, at least one of operations 501 to 509 may be omitted, the order of some operations may be changed, or another operation may be added. The operation of controlling power may be performed by the electronic device 101 of FIG. 1, the processor 120 of FIG. 1, the electronic device 201 of FIG. 2, or the processor 220 of FIG. 2.

In operation 501, the electronic device 201 may determine an input voltage of the PMU (e.g., the PMU 288 of FIG. 2) to be the first voltage.

According to an embodiment, the electronic device 201 may receive an input voltage of the PMU detected by the sensing circuit (e.g., the sensing circuit 291 of FIG. 3) of the power compensation circuit (the power compensation circuit 290 of FIGS. 2 and 3). When determining that the input voltage of the PMU is equal to or less than the first threshold (e.g., 2.4V), the electronic device 201 may determine the input voltage of the PMU to be the first voltage.

According to an embodiment, the electronic device 201 may receive the first signal indicating that the input voltage of the PMU is the first voltage equal to or less than the first threshold from the sensing circuit (e.g., the sensing circuit 291 of FIG. 3) of the power compensation circuit.

In operation 503, the electronic device 201 may supply power of the power compensation circuit (e.g., the power compensation circuit 290 of FIGS. 2 and 3) to the PMU (e.g., the PMU 288 of FIG. 2).

According to an embodiment, the electronic device 201 may connect the power compensation circuit and the PMU to each other to supply power stored in the power compensation circuit to the PMU.

In operation 505, when identifying that the voltage of the power compensation circuit (e.g., the power compensation circuit 290 of FIGS. 2 and 3) is the second threshold, the electronic device 201 may cut off the power supply to the PMU (e.g., the PMU of FIG. 2).

According to an embodiment, when determining that the voltage of the power compensation circuit is determined to be the second threshold while supplying power stored in the power compensation circuit to the PMU, the electronic device 201 may disconnect the power compensation circuit and the PMU from each other and cut off the power supply to the PMU.

In operation 507, the electronic device 201 may determine the input voltage of the PMU (e.g., the PMU 288 of FIG. 2) to be the first voltage within a specific time.

According to an embodiment, when the electronic device 201 receives an input voltage of the PMU detected by the sensing circuit (e.g., the sensing circuit 291 of FIG. 3) of the power compensation circuit (e.g., the power compensation circuit of FIGS. 2 and 3) within a specific time, and determines that the input voltage of the PMU is equal to or less than the first threshold (e.g., 2.4V), the electronic device 201 may determine that the battery (e.g., the battery 289) is in the low-voltage state requiring power-off.

According to an embodiment, when the electronic device 201 determines the input voltage of the PMU to be the first voltage again within a specific time after determining the input voltage of the PMU to be the first voltage and supplying power to the PMU so that the UVLO circuit included in the PMU does not operate, the electronic device 201 may determine that the battery (e.g., the battery 289 of FIG. 2) is in the low-voltage state requiring power-off.

According to an embodiment, upon receipt of the first signal indicating that the input voltage of the PMU is the first voltage equal to or less than the first threshold from the sensing circuit (e.g., the sensing circuit 291 of FIG. 3) of the power compensation circuit (e.g., the power compensation circuit of FIGS. 2 and 3) within a specific time after determining the input voltage of the PMU to be the first voltage and supplying power to the PMU so that the UVLO circuit included in the PMU does not operate, the electronic device 201 may determine that the battery (e.g., the battery 289 of FIG. 2) is in the low-voltage state requiring power-off.

In operation 509, the electronic device 201 may not supply power to the PMU, so that the UVLO circuit (e.g., the UVLO circuit 288a of FIG. 2) included in the PMU (e.g., the PMU 288 of FIG. 2) operates.

According to an embodiment, as the electronic device 201 does not supply power to the PMU, the UVLO circuit included in the PMU may operate normally to power off the electronic device in order to protect the PMU in the low-voltage state of the battery (e.g., the battery 289).

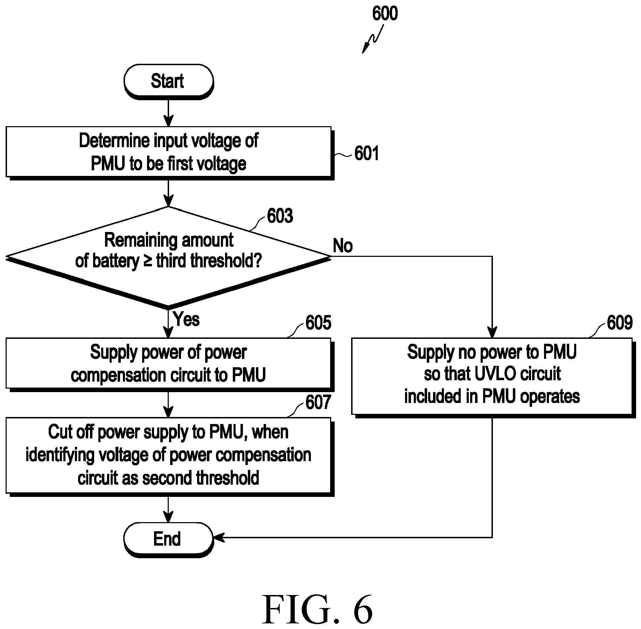

FIG. 6 is a flowchart 600 illustrating an operation of controlling power in an electronic device according to various embodiments. The operation of controlling the power may include operations 601 to 609. According to an embodiment, at least one of operations 601 to 609 may be omitted, the order of some operations may be changed, or another operation may be added. The operation of controlling power may be performed by the electronic device 101 of FIG. 1, the processor 120 of FIG. 1, the electronic device 201 of FIG. 2, or the processor 220 of FIG. 2.

In operation 601, the electronic device 201 may determine an input voltage of the PMU (e.g., the PMU 288 of FIG. 2) to be the first voltage.

According to an embodiment, the electronic device 201 may receive an input voltage of the PMU detected by the sensing circuit (e.g., the sensing circuit 291 of FIG. 3) of the power compensation circuit (the power compensation circuit 290 of FIGS. 2 and 3). When determining that the input voltage of the PMU is equal to or less than the first threshold (e.g., 2.4V), the electronic device 201 may determine the input voltage of the PMU to be the first voltage.

According to an embodiment, the electronic device 201 may receive the first signal indicating that the input voltage of the PMU is the first voltage equal to or less than the first threshold from the sensing circuit (e.g., the sensing circuit 291 of FIG. 3) of the power compensation circuit (e.g., the power compensation circuit of FIGS. 2 and 3).

In operation 603, the electronic device 201 may determine whether the remaining amount of the battery (e.g., the battery 289 of FIG. 2) is equal to or greater than the third threshold.

According to an embodiment, the electronic device 201 may compare the remaining amount of the battery with the third threshold and determine that the remaining amount of the battery is equal to or greater than the third threshold.

In operation 605, the electronic device 201 may supply power of the power compensation circuit (e.g., the power compensation circuit 290 of FIGS. 2 and 3) to the PMU (e.g., the PMU 288 of FIG. 2).

According to an embodiment, the electronic device 201 may connect the power compensation circuit and the PMU to each other to supply power stored in the power compensation circuit to the PMU.

In operation 607, when identifying that the voltage of the power compensation circuit (e.g., the power compensation circuit 290) is the second threshold, the electronic device 201 may cut off the power supply to the PMU 288.

According to an embodiment, when determining the voltage of the power compensation circuit to be the second threshold while supplying power stored in the power compensation circuit to the PMU, the electronic device 201 may disconnect the power compensation circuit and the PMU from each other and cut off the power supply to the PMU.

When the electronic device 201 determines that the remaining amount of the battery (e.g., the battery 289 of FIG. 2) is equal to or less than the third threshold in operation 603, the electronic device 201 may not supply power to the PMU so that the UVLO circuit (e.g., the UVLO circuit 288a of FIG. 2) included in the PMU (e.g., the PMU 288 of FIG. 2) operates in operation 609

According to an embodiment, as the electronic device 201 determines that the battery is in the low-voltage state requiring power-off and does not supply power to the PMU, the UVLO circuit included in the PMU may operate normally to power off the electronic device in order to protect the PMU in the low-voltage state of the battery.

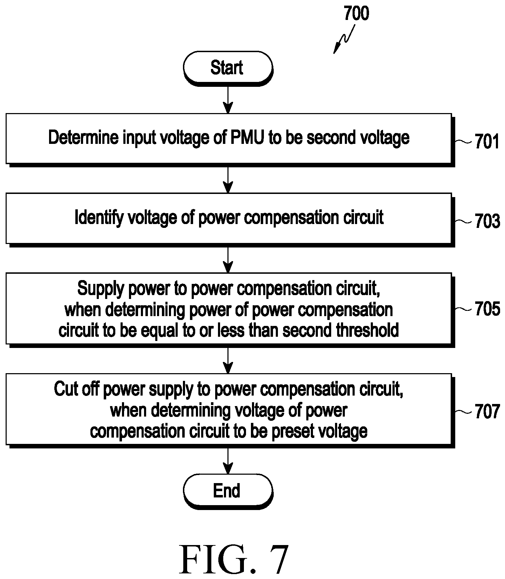

FIG. 7 is a flowchart 700 illustrating an operation of controlling power in an electronic device according to various embodiments of the present disclosure. The operation of controlling the power may include operations 701 to 707. According to an embodiment, at least one of operations 701 to 707 may be omitted, the order of some operations may be changed, or another operation may be added. The operation of controlling power may be performed by the electronic device 101 of FIG. 1, the processor 120 of FIG. 1, the electronic device 201 of FIG. 2, or the processor 220 of FIG. 2.

In operation 701, the electronic device 201 may determine an input voltage of the PMU (e.g., the PMU 288 of FIG. 2) to be the second voltage.

According to an embodiment, the electronic device 201 may receive an input voltage of the PMU detected by the sensing circuit (e.g., the sensing circuit 291 of FIG. 3) of the power compensation circuit (the power compensation circuit 290 of FIGS. 2 and 3). When determining that the input voltage of the PMU is equal to or greater than the first threshold (e.g., 2.4V), the electronic device 201 may determine the input voltage of the PMU to be the second voltage.

According to an embodiment, the electronic device 201 may receive the second signal indicating that the input voltage of the PMU is the second voltage equal to or greater than the first threshold from the sensing circuit of the power compensation circuit.

In operation 703, the electronic device 201 may identify the voltage of the power compensation circuit (e.g., the power compensation circuit 290 of FIGS. 2 and 3).

According to an embodiment, the electronic device 201 may identify the voltage of the storage circuit (e.g., the storage circuit 295 of FIG. 3) of the power compensation circuit.

In operation 705, when determining that the voltage of the power compensation circuit (e.g., the power compensation circuit 290 of FIGS. 2 and 3) is equal to or less than the second threshold, the electronic device 201 may supply power to the power compensation circuit.

According to an embodiment, when determining that the voltage of the storage circuit (e.g., the storage circuit 295 of FIG. 3) included in the power compensation circuit is equal to or less than the second threshold, the electronic device may control the supply circuit (e.g., the supply circuit 297 of FIG. 3) to supply power to the power compensation circuit by connecting the supply circuit to the storage circuit.

In operation 707, when determining the voltage of the power compensation circuit (e.g., the power compensation circuit 290 of FIGS. 2 and 3) to be a pre-set voltage, the electronic device 201 may cut off the power supply to the power compensation circuit.

According to an embodiment, when the voltage of the storage circuit reaches the pre-set voltage (e.g., 6.6V) while the supply circuit is supplying power to the storage circuit in the power compensation circuit, the electronic device 201 may cut off the power supply to the storage circuit by disconnecting the supply circuit and the storage circuit from each other.

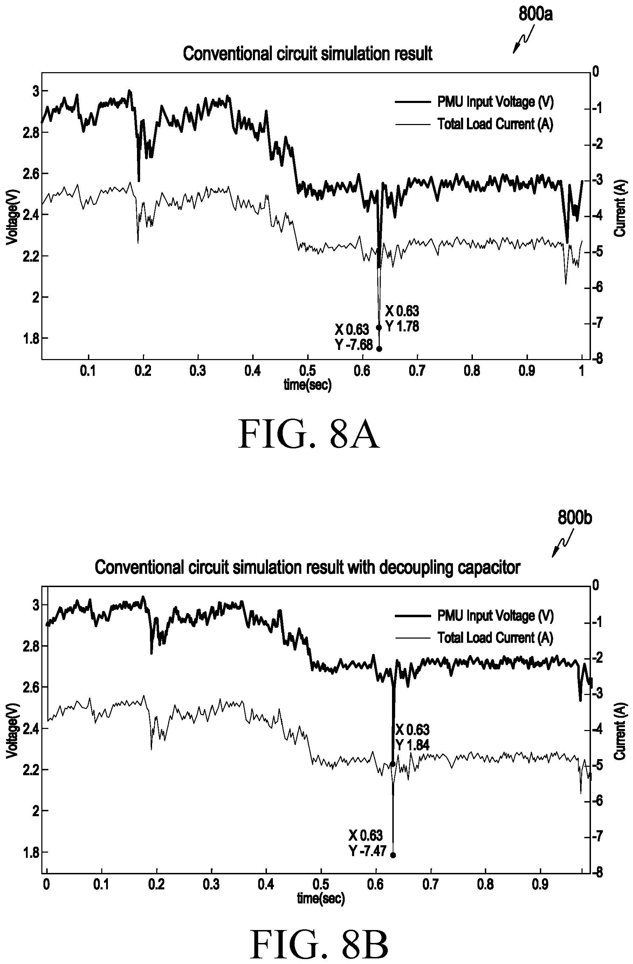

FIGS. 8a to 8c are graphs 800a to 800c illustrating simulation results.

FIG. 8a is a graph illustrating the result of simulating generation of a peak current, in a state in which a simulation model is set up based on a load current profile of an electronic device, power distribution network (PDN) characteristics, and lithium-ion battery (LIB) characteristics.

FIG. 8b is a graph illustrating a simulation result when a decoupling capacitor is applied, in a state in which a simulation model is set up based on a load current profile of an electronic device, PDN characteristics, and LIB characteristics.

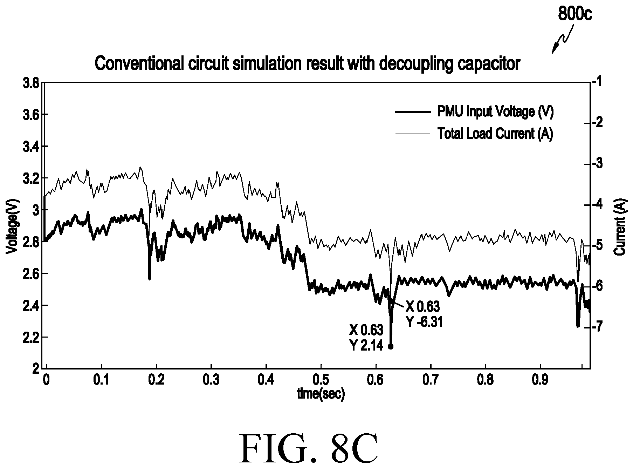

FIG. 8c is a graph illustrating a simulation result when a power compensation circuit is applied, in a state in which a simulation model is set up based on a load current profile of an electronic device, PDN characteristics, and LIB characteristics according to an embodiment.

The following <Table 1> is a comparison table of the simulation results of FIGS. 8a to 8c.

**Table 1]**

| | Conventional circuit (a) ->FIG. 8a | (a) with 188uF decoupling capacitor (b) -> FIG. 8b | Proposed circuit (c) ->FIG. 8c | Delta (b) vs. (c) |
|---|---|---|---|---|
| Peak load current(A) | 7.68 | 7.74 | 6.31 | ▼1.16 |
| Minimum voltage(V) | 1.78 | 1.84 | 2.14 | ▲0.3 |
| Assistant current(A) | - | 0.288 | 1.41 | ▲1.122 |

According to <Table 1>, it may be noted that a peak load current (A) decreases by "▼1.16", a minimum voltage (V) increases by "▲0.3", and a current supplied to the PMU, an assistant current (A) increases by **"▲** 1.122", when a power compensation circuit (c) according to the disclosure is applied as illustrated in FIG. 8c rather than when a decoupling capacitor (b) is applied as illustrated in FIG. 8b. According to various embodiments, a method of controlling power in an electronic device may include, when an input voltage of a PMU is determined to be a first voltage, supplying power stored in a power compensation circuit to the PMU to prevent a UVLO circuit included in the PMU and operating to power off the electronic device from operating, and when the input voltage of the PMU is determined to be a second voltage, charging the power compensation circuit with power to be supplied.

According to various embodiments, the method may further include comparing the input voltage of the PMU with a first threshold, when the input voltage of the PMU is equal to or less than the first threshold, determining the input voltage of the PMU to be the first voltage, and when the input voltage of the PMU is equal to or greater than the first threshold, determining the input voltage of the PMU to be the second voltage.

According to various embodiments, the method may further include cutting off power supply to the PMU, when a voltage of the power compensation circuit becomes equal to or less than a second threshold while the power stored in the power compensation circuit is supplied to the PMU in a state in which the voltage of the power compensation circuit is a pre-set voltage.

According to various embodiments, the method may further include powering off the electronic device by operating the UVLO circuit, when an input voltage of the PMU detected by the power compensation circuit is determined to be the first voltage within a specific time after the UVLO circuit is prevented from operating by supplying the power stored in the power compensation circuit to the PMU.

According to various embodiments, supplying power to the power compensation circuit may include, when an input voltage of the PMU detected by the power compensation circuit is determined to be the second voltage, identifying a voltage of the power compensation circuit, and when the voltage of the power compensation circuit is equal to or less than a second threshold, charging the power compensation circuit by supplying power to the power compensation circuit.

According to various embodiments, the method may further include, when the voltage of the power compensation circuit is determined to be a pre-set voltage while the power is supplied to the power compensation circuit, cutting off power supply to the power compensation circuit.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a power management unit configured to supply power to a component of the electronic device, and include an under-voltage lockout circuit configured to monitor an input voltage of the power management unit and, when the input voltage of the power management unit is determined to be a first voltage, operate to power off the electronic device;
a power compensation circuit configured to detect the input voltage of the power management unit, and supply power to the power management unit or store power to be supplied to the power management unit based on the input voltage of the power management unit; and
a processor configured to supply power stored in the power compensation circuit to the power management unit to prevent the under-voltage lockout circuit from operating, when the input voltage of the power management unit detected by the power compensation circuit is determined to be the first voltage.

2. The electronic device of claim 1, wherein the processor is configured to determine the input voltage of the power management unit to be the first voltage, when the input voltage of the power management unit detected by the power compensation circuit is equal to or less than a first threshold.

3. The electronic device of claim 1 or 2, wherein the processor is configured to cut off power supply to the power management unit, when a voltage of the power compensation circuit becomes equal to or less than a second threshold while the power stored in the power compensation circuit is supplied to the power management unit in a state in which the voltage of the power compensation circuit is a pre-set voltage.

4. The electronic device of claim 1, 2, or 3, wherein the processor is configured to operate the under-voltage lockout circuit to power off the electronic device, when the input voltage of the power management unit detected by the power compensation circuit is determined to be the first voltage within a specific time after the under-voltage lockout circuit is prevented from operating by supplying the power stored in the power compensation circuit to the power management unit.

5. The electronic device of any of the claims 1-4, wherein the processor is configured to:
when the input voltage of the power management unit detected by the power compensation circuit is equal to or greater than a first threshold, determine the input voltage of the power management unit to be a second voltage,
when the input voltage of the power management unit detected by the power compensation circuit is determined to be the second voltage, identify a voltage of the power compensation circuit, and
when the voltage of the power compensation circuit is equal to or less than a second threshold, charge the power compensation circuit by supplying power to the power compensation circuit.

6. The electronic device of claim 5, wherein the processor is configured to cut off power supply to the power compensation circuit, when the voltage of the power compensation circuit is determined to be a pre-set voltage while the power is supplied to the power compensation circuit.

7. The electronic device of any of the claims 1-6, wherein the power compensation circuit comprises:
a sensing circuit configured to detect the input voltage of the power management unit by monitoring the input voltage of the power management unit;
a switch configured to connect a storage circuit and the power management unit to each other to supply power stored in the storage circuit to the power management unit;
the storage circuit configured to receive power from a supply circuit, store the power, and supply the stored power to the power management unit; and
the supply circuit configured to supply power to the storage circuit.

8. The electronic device of claim 7, wherein the switch is configured to, when the input voltage of the power management unit is the first voltage, connect the storage circuit and the power management unit to each other to supply the power stored in the storage circuit to the power management unit, and when the voltage of the storage circuit becomes equal to or less than a second threshold while the power stored in the storage circuit is supplied to the power management unit, disconnect the storage circuit and the power management unit from each other.

9. The electronic device of claim 7 or 8, wherein the storage circuit is configured to receive power from the supply circuit and store the power, and when the input voltage of the power management unit is the first voltage, supply the power to the power management unit.

10. The electronic device of claim 7, 8, or 9, wherein the supply circuit is configured to, when a voltage of the storage circuit is equal to or less than a second threshold, be connected to the storage circuit and supply power to the storage circuit, and when the voltage of the storage circuit becomes a pre-set voltage while the power is supplied to the storage circuit, be disconnected from the storage circuit.

11. A method of controlling power in an electronic device, the method comprising:
when an input voltage of a power management unit is determined to be a first voltage, supplying power stored in a power compensation circuit to the power management unit to prevent an under-voltage lockout circuit, included in the power management unit and operating to power off the electronic device, from operating; and
when the input voltage of the power management unit is determined to be a second voltage, charging the power compensation circuit with power to be supplied.

12. The method of claim 11, further comprising:
comparing the input voltage of the power management unit with a first threshold;
when the input voltage of the power management unit is equal to or less than the first threshold, determining the input voltage of the power management unit to be the first voltage; and
when the input voltage of the power management unit is equal to or greater than the first threshold, determining the input voltage of the power management unit to be the second voltage.

13. The method of claim 11 or 12, further comprising cutting off power supply to the power management unit, when a voltage of the power compensation circuit becomes equal to or less than a second threshold while the power stored in the power compensation circuit is supplied to the power management unit in a state in which the voltage of the power compensation circuit is a pre-set voltage.

14. The method of claim 11, 12, or 13, further comprising powering off the electronic device by operating the under-voltage lockout circuit, when an input voltage of the power management unit detected by the power compensation circuit is determined to be the first voltage within a specific time after the under-voltage lockout circuit is prevented from operating by supplying the power stored in the power compensation circuit to the power management unit.

15. The method of any of the claims 11-14, further comprising:
when an input voltage of the power management unit detected by the power compensation circuit is determined to be the second voltage, identifying a voltage of the power compensation circuit;
when the voltage of the power compensation circuit is equal to or less than a second threshold, charging the power compensation circuit by supplying power to the power compensation circuit; and
when the voltage of the power compensation circuit is determined to be a pre-set voltage while the power is supplied to the power compensation circuit, cutting off power supply to the power compensation circuit.
